# EUROPEAN PATENT APPLICATION

(11) **EP 2 706 525 A2**
(43) Date of publication of application: **12.03.2014**
(21) Application number: 13174229.8
(22) Date of filing: 28.06.2013
(51) Int. Cl.: G09G 3/36

(54) **Liquid crystal display and driving method thereof**

(30) Priority: 07.09.2012 CN 201210331560
(71) Applicant: Beijing Boe Optoelectronics Technology Co. Ltd., Beijing 100176 (CN)
(72) Inventor: Meng, Zhiming, 100176 Beijing (CN)
(74) Representative: Brötz, Helmut

(57) **Abstract**

The method comprises the following steps: upon one image frame being displayed, driving each row of pixels in accordance with an arrangement order of rows in sequence; upon pixels in any row being driven, driving two pixels of one same pixel group successively. A driving sequence of the two pixels of the same pixel group is alternately changed in continuous image frames.

## Description

### FIELD OF THE INVENTION

Embodiments of the present invention relate to a liquid crystal display and a driving method thereof.

### BACKGROUND

In recent years, display technology has been undergoing rapid development. The flat panel display device is the developing trend of the image display device with features such as complete flatness, light weight, thinness and power-saving, and. At present, flat panel display devices include plasma display panel (PDP), liquid crystal display (LCD), field emission display (FED), organic light emitting diode (OELD) display devices, and etc. Meanwhile, LCD is becoming the most popular technique in the field.

Currently, most of LCDs include a gate driver and a source driver, respectively, to provide the scan signal and the data signal. When displaying the image, the scanning lines corresponding to a frame are sequentially turned on under the control of the scanning signal. And then the corresponding data signals are input to the scanning line after turning on the scanning line. Finally, the data information input upon turning on the line is stored in all of the pixels in the scanning line when turning off the scanning line.

In the present driving method for the dual gate structure, the driving sequence of a pair of gate lines corresponding to the same row of pixel electrodes is kept unchanged when displaying each frame. As for the driving method for a dual gate structure, upon each frame being displayed, the driving sequence of a pair of gate lines which will cause insufficient charging on the pixel electrodes due to the data outputting wave and the polarity switching form of the data lines, thereby adjacent pixel electrodes at both sides of one data line being charged non-uniformly. Therefore, continuous vertical light and dark lines appear visually in the image, which seriously affects the quality of the displaying image.

### SUMMARY

Embodiments of the present invention relate to a liquid crystal display and a driving method thereof. By using the embodiment of the invention, upon image being displayed in a liquid crystal display of dual gate structure, two pixels of one same pixel group corresponding to adjacent pixel electrodes connected with one same data line are charged uniformly, so that the screen quality is improved.

An embodiment of the invention provides a method for driving a liquid crystal display, the liquid crystal display comprising: a plurality of pixels arranged in a matrix along a row direction and a column direction, each pixel containing a pixel electrode, every two adjacent pixels in the row direction constituting a pixel group; a plurality of pairs of gate lines extending in the row direction and a plurality of data lines extending in the column direction; a gate driving circuit and a data driving circuit, connected with the gate lines and the data lines, respectively; and a plurality of thin film transistors, wherein two pixel electrodes in one same pixel group are connected with one same data line and are respectively connected with different gate lines of a pair of gate lines through the thin film transistor, the method comprising: upon one image frame being displayed, driving each row of pixels in accordance with an arrangement order of rows in sequence; upon pixels in any row being driven, driving two pixels of one same pixel group successively, wherein a driving sequence of the two pixels of the same pixel group is alternately changed in continuous image frames.

In one example, the two pixel electrodes of the same pixel group are located on both sides of a corresponding data line.

In one example, in continuous image frames, the polarity of the driving signal for each pixel is alternately changed.

In one example, two gate driving circuits are provided and connected to both ends of each gate line, respectively, and the two gate drive circuits synchronously apply driving signals on each gate line.

In one example, each row of pixels are controlled by one corresponding pair of gate lines, and the row of pixels are interposed between the two gate lines in the corresponding pair of gate lines.

Another embodiment of the invention provides a liquid crystal display, comprising: a plurality of pixels arranged in a matrix along a row direction and a column direction, each pixel containing a pixel electrode, every two adjacent pixels in the row direction constituting a pixel group; a plurality of pairs of gate lines extending in the row direction and a plurality of data lines extending in the column direction; a gate driving circuit and a data driving circuit, connected with the gate lines and the data lines, respectively; and a plurality of thin film transistors, wherein, two pixel electrodes in one same pixel group are connected with one same data line and are respectively connected with different gate lines of a pair of gate lines through the thin film transistor, and the gate driving circuit and the data driving circuit are configured so that, upon an image frame being displayed, each row of pixels are driven in accordance with an arrangement order of rows in sequence; upon pixels in any row being driven, two pixels of one same pixel group are driven successively and a driving sequence is alternately changed in continuous image frames.

As stated above, in the embodiments of the invention, upon each image frame being displayed, each row of pixels are driven in accordance with an arrangement order of rows in sequence; when pixels in any row are driven, two pixels of one same pixel group are driven successively, and the driving sequence of the two pixels in the same pixel group is alternately changed in continuous image frames, thus effectively avoiding the phenomenon of vertical bright and dark lines appearing in the displaying image due to non-uniform charging on the pixel electrodes of the same pixel group on both sides of the same data line. Thus, with the adoption of the method, upon a liquid crystal display of dual gate structure according to the embodiments of the invention displaying image, two pixels of one same pixel group corresponding to adjacent pixel electrodes connected with one same data line are charged uniformly, so that the screen quality is improved.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.

Figure 1 is a diagram for driving a plurality of rows of pixels upon continuous images being displayed;

Figure 2 is a diagram showing polarities of each pixel after sequential scanning for the left side image in Figure 1; and

Figure 3 is a diagram showing polarities of each pixel after sequential scanning for the right side image in Figure 1.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

A liquid crystal display of dual gate structure according to an embodiment of the invention includes a plurality of pixels arranged in a matrix along a row direction and a column direction, each pixel containing a pixel electrode, every two adjacent pixels in the row direction constituting a pixel group; a plurality of pairs of gate lines extending in the row direction and a plurality of data lines extending in the column direction; a gate driving circuit and a data driving circuit, connected with the gate lines and the data lines, respectively; and a plurality of thin film transistors, wherein two pixel electrodes in one same pixel group are connected to one same data line and to different gate lines in a pair of gate lines through the thin film transistor, respectively.

In order to eliminate the phenomenon of bright and dark vertical lines appeared in the displaying image due to non-uniform charging on the pixel electrodes of the same pixel group on both sides of the same data line, the present embodiment of the invention provides a driving method for a liquid crystal display, the method comprising: driving each row of pixels sequentially according to an arrangement order of rows; upon driving any one row of pixels, driving two pixels in one same pixel group sequentially, and the driving sequence of the two pixels in the same pixel group is alternately changed in continuous image frames.

The two pixel electrodes in the same pixel group are located on both sides of the corresponding data line.

For convenience of explanation, two gate lines in one pair of gate lines are referred to an odd-number gate line and an even-number gate line. In one embodiment, two pixel electrodes at both sides of a same data line in the same pixel electrode group (i.e., two pixel electrodes in the same pixel group) are connected to the odd-number gate line and the even-number gate line, respectively. Upon a first image frame being displayed, the odd-number gate line is driven before the even-number gate line, and upon a second image frame being displayed, the even-number gate line is driven before the odd-number gate line, and then upon a third image frame being displayed, the odd-number gate line is driven before the even-number gate line, and so on. Thus, the driving sequence of the odd-number gate line and the even-number gate line is alternately changed in continuous image frames, so that the driving sequence of two pixel electrodes at both sides of one same data line in the same pixel electrode group is alternately changed in continuous image frames, which remedies the bright and dark difference due to different charging situation of the two pixels in the same pixel group and eliminates vertical bright and dark lines in the image.

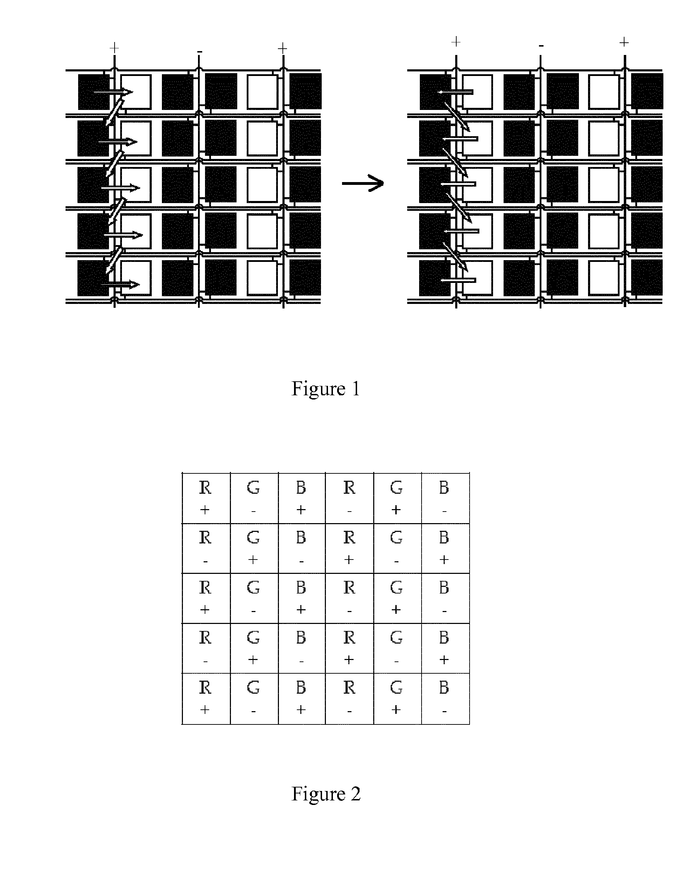

Figure 1 is a diagram for driving a plurality of rows of pixels upon continuous images being displayed. As illustrated in Figure 1, the pixels, which are located at the left side and right side of a corresponding data line in the same pixel group, are defined as a left pixel and a right pixel. Upon the left side image in Figure 1 being displayed, the left pixel in the same pixel group is driven before the right pixel. As observed from the entire image frame, the driving sequence of the respective pixels in a plurality of pixel groups at both sides of the same data line is arranged as a "Z" type; upon the next image frame (i.e., the right side image in Figure 1) being displayed, the right pixel in the same pixel group is driven before the left pixel. As observed from the entire image frame, the driving sequence of the respective pixels in a plurality of pixel groups at both sides of the same data line is arranged as an inverted "Z" type.

For example, in the continuous frames, the polarity of the driving signals for each pixel is alternately changed, but the polarity of each pixel is not changed. Since the driving sequence of the two pixels in the same pixel group is alternately changed in continuous image frames, the polarities of the pixel at the same location in two adjacent image frames are opposite, which realizes the dot inversion.

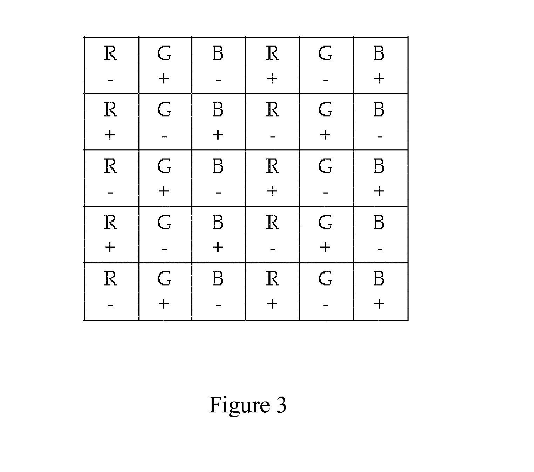

Figure 2 is a diagram showing polarities of each pixel after sequential scanning for the left side image in Figure 1, and Figure 3 is a diagram showing polarities of each pixel after sequential scanning for the right side image in Figure 1

The following description is made by taking the left-most pixel group in the first row of pixels in Figure 1 as an example, and the pixel group includes a pixel R and a pixel G. Upon the left image in Figure 1 being displayed, the pixel R is firstly driven with a positive polarity, then the pixels G is driven with a negative polarity, as illustrated in Figure 2; upon the right image in Figure 1 being displayed, the pixel G is firstly driven with a positive polarity, then the pixel R is driven with a negative polarity, as illustrated in Figure 3. By comparing Figure 2 and Figure 3, it can be known that in the continuous displaying of the image frames, the dot inversion is realized, and the quality of the displaying image is further improved.

For example, two gate driving circuits are provided, each of two ends of the gate lines are connected to one of the driving circuits, respectively, and the two gate driving circuits synchronously apply driving signals to one gate line, which can effectively improve the displaying speed to alleviate the image delay phenomenon, and further improve the picture quality.

Embodiment of the invention provides a liquid crystal display, the liquid crystal display comprises:

a plurality of pixels arranged in a matrix along a row direction and a column direction, each pixel containing a pixel electrode, every two adjacent pixels in the row direction constituting a pixel group;

a plurality of pairs of gate lines extending in the row direction and a plurality of data lines extending in the column direction;

a gate driving circuit and a data driving circuit, connected with the gate lines and the data lines, respectively; and

a plurality of thin film transistors,

wherein, two pixel electrodes in one same pixel group are connected with one same data line and to different gate lines in a pair of gate lines through the thin film transistor, respectively, and

the gate driving circuit and the data driving circuit are configured so that, upon an image frame being displayed, each row of pixels are driven in accordance with an arrangement order of rows in sequence; upon pixels in any row being driven, two pixels of one same pixel group are driven successively and a driving sequence is alternately changed in continuous image frames.

For example, two pixel electrodes in the same pixel electrode group are located at both sides of the corresponding data line. In continuous image frames, the polarity of a driving signal for each pixel is alternately changed.

For example, two gate driving circuits are provided, each of two ends of the gate lines are connected to one of the driving circuits, respectively, and the two gate driving circuits synchronously apply driving signals to one gate line.

For example, each row of pixels are controlled by one corresponding pair of gate lines, and the row of pixels are interposed between the two gate lines in the corresponding pair of gate lines.

Upon the liquid crystal display according to the embodiment of the present invention displaying image, by adopting the above-described embodiments of driving method, two pixels at both sides of the same data line in the same pixel group can be charged uniformly, the vertical bright and dark lines in the displaying image can be eliminated, and the quality of the displaying image can be increased. In addition, by using the bilateral gate lines form (i.e., each of both ends of the gate lines is connected with one of the gate driving circuits), the image delay phenomenon in the large sized screen can be alleviated, thereby further improving the displaying image quality.

By the above technical solutions, in the embodiments of the invention, upon each image frame being displayed, each row of pixels are driven sequentially according to the arrangement order of rows; upon any one row of pixels being driven, two pixels in one same pixel group are driven sequentially, and the driving sequence of the two pixels in the same pixel group is alternately changed in continuous image frames, thus effectively avoiding the phenomenon of vertical bright and dark lines appearing in the displaying image due to non-uniform charging on the pixel electrodes of the same pixel group on both sides of the same data line. Thus, upon a liquid crystal display of dual gate structure according to the embodiments of the invention displaying image, two pixels at both sides of the same data line in the same pixel group can be charged uniformly, the vertical bright and dark lines in the displaying image can be eliminated, and the quality of the displaying image can be increased.

The foregoing are merely exemplary embodiments of the invention, but are not used to limit the protection scope of the invention. The protection scope of the invention shall be defined by the attached claims.

## Claims

1. A method for driving a liquid crystal display, the liquid crystal display comprising: a plurality of pixels arranged in a matrix along a row direction and a column direction, each pixel containing a pixel electrode, every two adjacent pixels in the row direction constituting a pixel group; a plurality of pairs of gate lines extending in the row direction and a plurality of data lines extending in the column direction; a gate driving circuit and a data driving circuit, connected with the gate lines and the data lines, respectively; and a plurality of thin film transistors, wherein two pixel electrodes in one same pixel group are connected with one same data line and are respectively connected with different gate lines of a pair of gate lines through the thin film transistor,
the method comprising:
upon one image frame being displayed, driving each row of pixels in accordance with an arrangement order of rows in sequence; upon pixels in any row being driven, driving two pixels of one same pixel group successively, wherein a driving sequence of the two pixels of the same pixel group is alternately changed in continuous image frames.

2. The method according to claim 1, wherein the two pixel electrodes of the same pixel group are located on both sides of a corresponding data line.

3. The method according to claim 1 or 2, wherein, in continuous image frames, the polarity of the driving signal for each pixel is alternately changed.

4. The method according to any one of claims 1-3, wherein,
two gate driving circuits are provided and connected to both ends of each gate line, respectively, and the two gate drive circuits synchronously apply driving signals on each gate line.

5. The method according to any one of claims 1-4, wherein, each row of pixels are controlled by one corresponding pair of gate lines, and the row of pixels are interposed between the two gate lines in the corresponding pair of gate lines.

6. A liquid crystal display, comprising:
a plurality of pixels arranged in a matrix along a row direction and a column direction, each pixel containing a pixel electrode, every two adjacent pixels in the row direction constituting a pixel group;
a plurality of pairs of gate lines extending in the row direction and a plurality of data lines extending in the column direction;
a gate driving circuit and a data driving circuit, connected with the gate lines and the data lines, respectively; and
a plurality of thin film transistors,
wherein, two pixel electrodes in one same pixel group are connected with one same data line and are respectively connected with different gate lines of a pair of gate lines through the thin film transistor, and
the gate driving circuit and the data driving circuit are configured so that, upon an image frame being displayed, each row of pixels are driven in accordance with an arrangement order of rows in sequence; upon pixels in any row being driven, two pixels of one same pixel group are driven successively and a driving sequence is alternately changed in continuous image frames.

7. The liquid crystal display according to claim 6, wherein the two pixel electrodes of the same pixel group are located on both sides of a corresponding data line.

8. The liquid crystal display according to claim 6 or 7, wherein, in continuous image frames of screen, the polarity of the driving signal for each pixel is alternately changed.

9. The liquid crystal display according to any one of claims 6-8, wherein,
two gate driving circuits are provided and connected to both ends of each gate line, respectively, and the two gate drive circuits synchronously apply driving signals on each gate line.

10. The liquid crystal display according to any one of claims 6-9, wherein, each row of pixels are controlled by one corresponding pair of gate lines, and the row of pixels are interposed between the two gate lines in the corresponding pair of gate lines.
